# EUROPEAN PATENT APPLICATION

(11) **EP 2 060 995 A1**
(43) Date of publication of application: **20.05.2009**
(21) Application number: 08168652.9
(22) Date of filing: 07.11.2008
(51) Int. Cl.: G06Q 10/00

(54) **Workflow support apparatus, method of controlling the same, workflow support system, and program**

(30) Priority: 08.11.2007 JP 2007291331
(71) Applicant: Canon Kabushiki Kaisha, Tokyo 146-8501 (JP)
(72) Inventor: ITO, Fumitoshi, Ohta-ku Tokyo (JP)
(74) Representative: Garner, Jonathan Charles Stapleton

(57) **Abstract**

A user who instructs execution of reading of a paper document in which workflow information is embedded is authenticated (S801). The workflow information contains responsible person information and the process order of the steps of a workflow. The workflow information is extracted from the obtained read image (S804). Based on the responsible person information and the process order in the extracted workflow information and authentication information used to authenticate the user, the current step of the workflow of the read paper document is determined (S806).

## Description

### BACKGROUND OF THE INVENTION

### Field of the Invention

The present invention relates to a workflow support apparatus for supporting processing associated with a workflow that circulates a paper document to associated responsible persons and completes the processing, a method of controlling the same, a workflow support system, and a program.

### Description of the Related Art

In companies, conventionally, a series of work procedures such as paperwork and planning in which a plurality of operators are involved is defined as a workflow and practiced. A workflow support system has been implemented, which digitizes the management and practice of works according to the work procedures and actually manages and practices the flow of works. In such a workflow support system, a processing request or a rejection notification is sent as, for example, e-mail, thereby increasing the efficiency of operations.

Not all workflows are digitized workflows. Paper-based workflows are still in practical use. Examples are documents that legally require a seal or a signature on actual paper. To implement a digitized workflow, a large-scale workflow support system is necessary. For this reason, paper-based workflows are still used in large quantities.

On the other hand, many mechanisms for merging paper-based workflows with digitized workflows have been examined.

In a workflow support system disclosed in, for example, Japanese Patent Laid-Open No. 2000-003402, when printing a document that requires sealing, the paper-based workflow is managed by assigning a unique number to it so that the workflow is associated with a digitized workflow. Japanese Patent Laid-Open No. 2006-243830 proposes another workflow support system which writes a workflow on a paper sheet by printing, thereby changing the configuration or state of the workflow.

As described above, a paper-based workflow that requires no large-scale workflow support system is convenient but has the following problems. For example, a workflow which acquires approval by sealing on a document may require a lot of approvers.

Assume that an intermediate approver halfway in the workflow finds that the document is not in order and rejects it. The person (creator) who has submitted the application first can know about the rejection only after the document is returned. Then, re-application processing is performed. If the approver who has rejected directly delivers the defective document to the document creator by hand, other intermediate approvers between them cannot be notified of it.

On the other hand, if the document is returned in reverse order through all the intermediate approvers, a long time is required until the creator obtains the document. As a result, re-application delays, and the overall flow efficiency decreases. That is, a paper-based workflow is convenient but cannot increase the process efficiency, unlike a digitized workflow.

In this case, application of the workflow support system of Japanese Patent Laid-Open No. 2000-003402 or 2006-243830 only poses the following problems.

The system disclosed in Japanese Patent Laid-Open No. 2000-003402 or 2006-243830 can invoke a digitized workflow from information printed on a document. However, it is impossible to perform appropriate processing because the system cannot determine the already executed steps. Conversely, to know the current step of a paper-based workflow, it is necessary to manage both the flow of the document and the flow of the digitized workflow. This makes practical use of the system difficult. As described above, the conventional systems which associate a digitized workflow with a paper-based workflow cannot make the most of the advantages of the paper-based workflow.

### SUMMARY OF THE INVENTION

The present invention has been made to solve the above-described problems, and has as its object to provide a workflow support apparatus capable of improving the convenience and efficiency of a paper-based workflow, a method of controlling the same, a workflow support system, and a program.

The present invention in its first aspect provides a workflow support apparatus as specified in claims 1 to 9.

The present invention in its second aspect provides a workflow support system as specified in claim 10.

The present invention in its third aspect provides a method of controlling a workflow support apparatus as specified in claims 11 and 12.

The present invention in its fourth aspect provides a program as specified in claims 13 and 14.

Further features of the present invention will become apparent from the following description of exemplary embodiments with reference to the attached drawings.

### BRIEF DESCRIPTION OF THE DRAWINGS

Fig. 1 is a view showing the overall arrangement of a workflow support system to which the embodiment of the present invention is applicable;

Fig. 2 is a block diagram showing the detailed arrangements of the controller units of image forming apparatuses according to the embodiment of the present invention;

Fig. 3 is a block diagram showing the hardware configuration of a server and a client PC each functioning as an information processing apparatus according to the embodiment of the present invention;

Fig. 4 is a block diagram showing the configuration of software modules associated with control of various functions of the image forming apparatus according to the embodiment of the present invention;

Fig. 5 is a view showing the printer driver setting window of the client PC according to the embodiment of the present invention;

Fig. 6 is a view showing an example of workflow information transmitted from a printer driver to the image forming apparatus according to the embodiment of the present invention;

Fig. 7 is a view showing another example of workflow information according to the embodiment of the present invention;

Fig. 8 is a flowchart illustrating processing of executing a task embedded in a paper sheet according to the embodiment of the present invention;

Fig. 9 is a view showing an example of an operation window according to the embodiment of the present invention;

Fig. 10 is a flowchart illustrating details of a process in step S805 according to the embodiment of the present invention;

Fig. 11 is a view showing an example of a task list window according to the embodiment of the present invention; and

Fig. 12 is a view showing an example of a task setting display window according to the embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

An embodiment of the present invention will be described below in detail with reference to the accompanying drawings.

### <Workflow Support System>

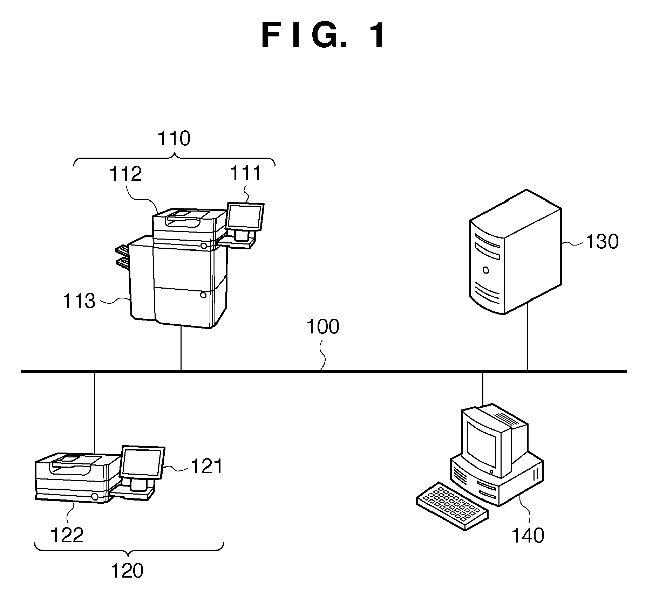

Fig. 1 is a view showing the overall arrangement of a workflow support system to which the embodiment of the present invention is applicable.

As shown in Fig. 1, an image forming apparatus 110 is connected to a LAN 100 formed from, for example, Ethernet^{®}. An image forming apparatus 120 having no printer engine, a server 130 functioning as an e-mail server and a file server computer, and a client computer (to be referred to as a client PC hereinafter) 140 are also connected to the LAN 100. Each of the image forming apparatuses 110 and 120 and the client PC 140 functions as a workflow support apparatus for supporting processing associated with a workflow that circulates a paper document to associated responsible persons and completes the processing.

In the system of the present invention, the number of connected apparatus is not limited to that described above. In this embodiment, a LAN is used for connection. However, the present invention is not limited to this. For example, an arbitrary network such as a WAN (public network), a serial transmission method such as USB, or a parallel transmission method such as centronics or SCSI is also applicable.

The image forming apparatus 110 has not only a copy function and a facsimile function but also a data transmission function of reading a document image and transmitting image data obtained upon reading to the apparatuses on the LAN 100. The image forming apparatus 110 can create e-mail containing an attached image file and send the e-mail using the server 130. The image forming apparatus 110 also has a PDL (Page Description Language) interpretation and rendering function so that it can receive and print a PDL image designated from a computer connected to the LAN 100.

The image forming apparatus 110 can also store an image read by itself or a PDL image designated from a computer connected to the LAN 100 in a specific area of an internal hard disk. The image forming apparatus 110 can also read a document image and store it in the hard disk as digital image data. The image forming apparatus 110 can also read out digital image data stored in the hard disk and print it.

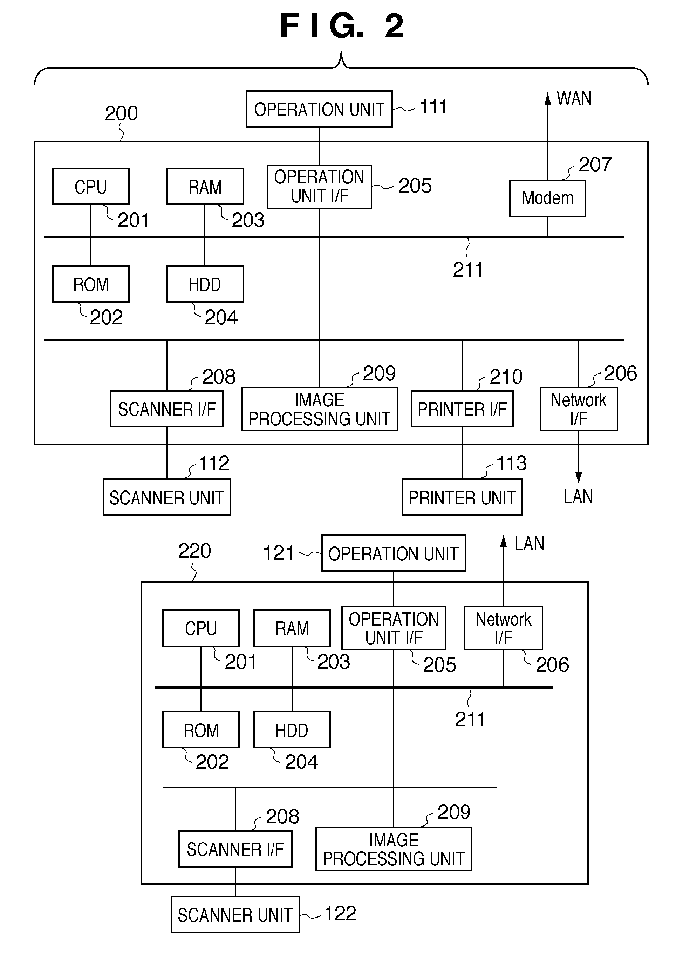

The image forming apparatus 110 includes a scanner unit 112, printer unit 113, controller unit 200 (Fig. 2), and operation unit 111. The scanner unit 112 is an image input device (reading unit). The printer unit 113 is an image output device. The controller unit 200 controls the operation of the overall image forming apparatus 110. The operation unit 111 is a user interface (UI) having an input unit and a display unit. The operation unit is formed from, for example, a touch panel.

The scanner unit 112 exposes and scans an image on a document and inputs obtained reflected light to a CCD, thereby converting the image information into an electrical signal. The scanner unit 112 converts the electrical signal into a luminance signal of RGB and outputs the luminance signal to the controller unit 200 as image data.

The document is set on a document feeder (not shown). When the user gives the instruction to start reading via the operation unit 111, the controller unit 200 sends a reading instruction to the scanner unit 112. Upon receiving the reading instruction, the scanner unit 112 feeds the document pages one by one from the document feeder and reads them. The document pages need not always be read by automatic feeding using the document feeder. Instead, the document pages may be scanned by placing each of them on a glass plate (not shown) and moving the exposure unit.

The printer unit 113 is an image forming device which forms, on a paper sheet, image data received from the controller unit 200. The image forming method of this embodiment is an electrophotographic method using a photosensitive drum or a photosensitive belt. However, the present invention is not limited to this. For example, an inkjet method of discharging ink from a micronozzle array and printing on a paper sheet is also applicable.

The image forming apparatus 120 includes a scanner unit 122, controller unit 220 (Fig. 2), and operation unit 121. The scanner unit 122 is an image input device. The controller unit 220 controls the operation of the overall image forming apparatus 120. The operation unit 121 is a user interface (UI). The scanner unit 122 and the operation unit 121 of the image forming apparatus 120 are the same as those of the image forming apparatus 110.

The server 130 causes a CPU to execute an operating system (to be referred to as an OS hereinafter) and various application programs and executes the applications under the control of the OS, thereby performing various data processes. This also applies to the client PC 140.

### <Detailed Explanation of Controller Unit>

Fig. 2 is a block diagram showing the detailed arrangements of the controller units of the image forming apparatuses according to the embodiment of the present invention.

The controller unit 200 of the image forming apparatus 110 is electrically connected to the scanner unit 112 and the printer unit 113. The controller unit is also connected to the image forming apparatus 120, the server 130, and the client PC 140 via the LAN 100. This enables input/output of image data and device information.

A CPU 201 comprehensively controls access to various connected devices based on a control program and the like stored in a ROM 202 and also comprehensively controls various processes executed in the controller unit 200.

The ROM 202 stores control programs such as the boot program of the apparatus.

A RAM 203 is a system work memory to be used for the operation of the CPU 201 and also serves as a memory to temporarily store image data. The RAM 203 includes an SRAM which holds stored contents even after power-off and a DRAM which erases stored contents after power-off.

An HDD 204 is a hard disk drive which stores system software and various kinds of data such as image data.

An operation unit I/F 205 is an interface unit which connects a system bus 211 to the operation unit 111. The operation unit I/F 205 receives, from the system bus 211, image data to be displayed on the operation unit 111 and outputs it to the operation unit 111. The operation unit I/F 205 also outputs information input from the operation unit 111 to the system bus 211.

A Network I/F 206 is connected to the LAN 100 and the system bus 211 to input/output information.

A Modem 207 is connected to a WAN (not shown) and the system bus 211 to input/output information.

A scanner I/F 208 executes various processes such as correction, manipulation, and editing for image data received from the scanner unit 112. The scanner I/F 208 determines the document type of received image data, that is, whether it is a color document or monochrome document, or whether it is a text document or photo document. The scanner I/F 208 adds the determination result to the image data as associated information. The associated information will be called attribute data.

An image processing unit 209 executes various kinds of image processing such as image data direction conversion and image compression/decompression. The image processing unit 209 can composite image data stored in the HDD 204 to generate one image data.

A printer I/F 210 receives image data transmitted from the image processing unit 209 and executes image forming processing of the image data while referring to the attribute data added to it. The image data that has undergone the image forming processing is output to the printer unit 113.

User instruction input to the image forming apparatus 110 and information presentation to the user can be done via, for example, either the operation unit 111 or a client PC 140 connected via the LAN 100.

The controller unit 220 in the image forming apparatus 120 does not include the printer I/F 210 and the Modem 207 in the controller unit 200 of the image forming apparatus 110.

### <Hardware Configuration of Computer>

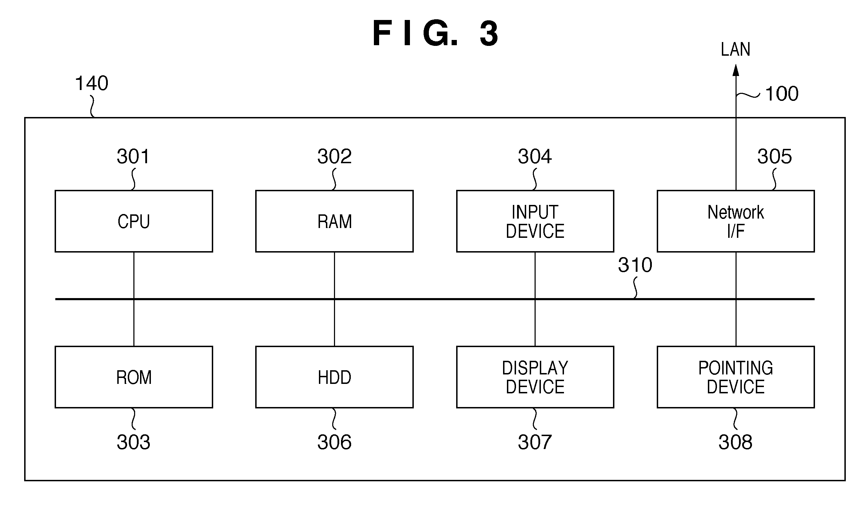

Fig. 3 is a block diagram showing the hardware configuration of the server and the client PC each functioning as an information processing apparatus according to the embodiment of the present invention.

Referring to Fig. 3, a CPU 301, RAM 302, ROM 303, Network I/F 305, and hard disk drive (HDD) 306 are communicably connected via a system bus 310.

Additionally, a display device 307 such as a CRT, an input device 304 such as a keyboard, and a pointing device 308 such as a mouse are communicably connected via the system bus 310.

The ROM 303 or the HDD 306 stores control programs in advance. The CPU 301 reads out the control programs from the ROM 303 or the HDD 306 to the RAM 302 and executes them as needed to provide functions as a computer.

The CPU 301 also displays various kinds of information via the display device 307 and receives various instructions such as a user instruction from the input device 304 or the pointing device 308. The CPU 301 also communicates with other apparatuses on the LAN 100 via the Network I/F 305. The client PC has the same arrangement as the server 130 shown in Fig. 3.

### <Software Configuration of Image Forming Apparatus>

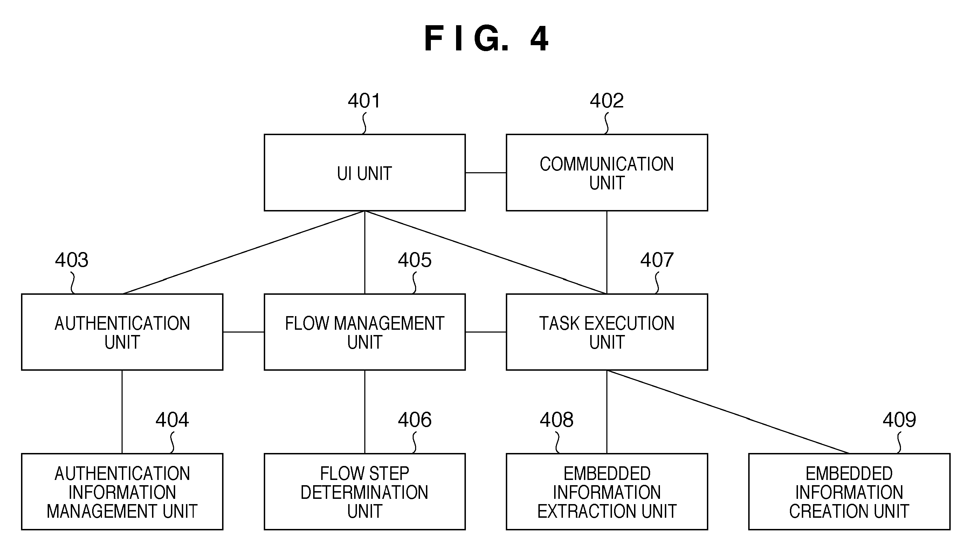

Fig. 4 is a block diagram showing the configuration of software modules associated with control of various functions (to be referred to as tasks hereinafter) of the image forming apparatus according to the embodiment of the present invention. These software modules are executed by the CPU 201 in the controller unit 200 of the image forming apparatus 110.

A UI unit 401 is a software module which performs display on the operation unit 111 via the operation unit I/F 205 or processes user inputs from the operation unit 111.

A communication unit 402 is a software module which performs communication by operating the Network I/F 206 or Modem 207.

An authentication unit 403 is a software module which performs user authentication using the login information of the user operated from the UI unit 401 or user information received from the communication unit 402 and manages user's session.

An authentication information management unit 404 is a software module which manages authentication information (login information and user information) to authenticate a user and answers an inquiry about authentication information from the authentication unit 403. In this embodiment, the authentication information is managed in the image forming apparatus 110. However, a dedicated authentication server may separately be provided to manage the authentication information.

A flow management unit 405 is a software module which analyzes the setting file of a workflow and sends a corresponding processing request to a task execution unit 407.

A flow step determination unit 406 is a software module which determines the current step of a workflow based on authentication information and order information in the workflow settings. Details of the workflow settings will be described later.

The task execution unit 407 is a software module which executes tasks based on the setting information of various tasks.

An embedded information extraction unit 408 is a software module which separates watermark information (embedded information) from image data read by the scanner unit 112 upon executing a scan task, and stores the watermark information as a file in the HDD 204.

An embedded information creation unit 409 is a software module which creates a file on the HDD 204 as watermark information (embedded information) upon executing a print task, and composites it with a print image (e.g., an image to print a paper document of circulation target).

Various tasks are generated in accordance with requests from the UI unit 401, communication unit 402, and flow management unit 405. For example, upon receiving a copy or scan instruction from the user, the UI unit 401 transfers the task settings of copy or scan to the task execution unit 407. Similar processing is performed even when task settings are received from another image forming apparatus or client PC via the communication unit 402.

A method of causing the software modules to cooperatively execute tasks under the control of the CPU 201 will be described later in detail.

### <Paper Output for Paper-Based Workflow>

Processing of causing a user as the starting point of a paper-based workflow to output a paper sheet for circulation or approval using the client PC 140 and the image forming apparatus 110 will be described first.

The user creates a document using an application program on the client PC 140. The user prints the document using a printer driver for the image forming apparatus 110 (print unit) on the client PC 140. At this time, the user inputs workflow information as printer driver settings.

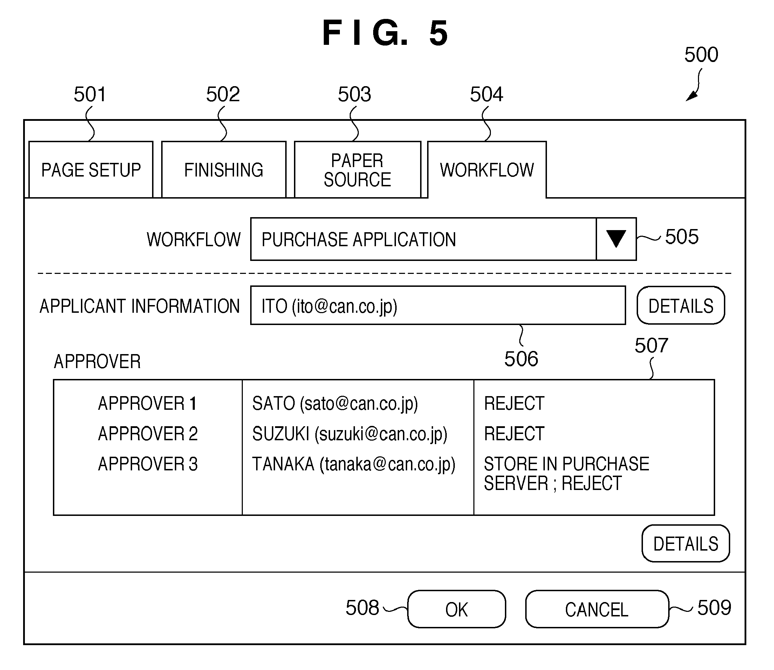

Fig. 5 shows the printer driver setting window of the client PC according to the embodiment of the present invention.

On a setting window 500, a page setup tab 501 is used to set the number of copies, imposition, and the like. A finishing tab 502 is used to set stapling and bookbinding. A paper source tab 503 is used to set a paper feed stage to feed paper. In this embodiment, a workflow setting tab 504 is used to set a workflow.

Fig. 5 particularly shows a state in which a workflow setting window of the workflow setting tab 504 is displayed.

A pull-down combo box 505 is used to select a template of workflow information to be executed on paper base. The user can select a template corresponding to a workflow to be executed using paper from a plurality of preset workflow information templates.

A workflow information template contains the information of the number of approvers and the process order, workflow responsible person information (the approvers and applicant and the association between them), and the information of tasks of the image forming apparatus that are executable by the approvers. If predetermined approvers should be involved independently of the applicant, fixed approver information may be set. Task information includes set values to be used by the task execution unit 407 to execute tasks.

The workflow information template can be either held in the printer driver in advance or acquired by communication from a server or image forming apparatus that independently holds the list of workflows.

After selecting a workflow template in the combo box 505, the user inputs applicant information to an applicant information input field 506 (first input area). In this embodiment, the applicant information contains the login user name, in the image forming apparatus 110, and e-mail address of the user who submits the application. Instead of directly inputting the applicant information, the user may search for and designate it in a user database of the client PC 140 or another server.

Then, the user inputs approvers corresponding to the applicant to an approver list 507 (second input area). The information may automatically be input from the approver information and the relationship between the applicant and approvers set in the workflow information template.

The user can set tasks of the image forming apparatus that are executable by the approvers in the approver list 507. In this example, information set in the workflow template is displayed as default.
However, the user can also separately set detailed information.

When the user presses an OK button 508, the thus input workflow information is confirmed and transmitted from the printer driver to the image forming apparatus 110 together with PDL information. If the user presses a cancel button 509, the input workflow information is canceled, and display of the setting window 500 ends.

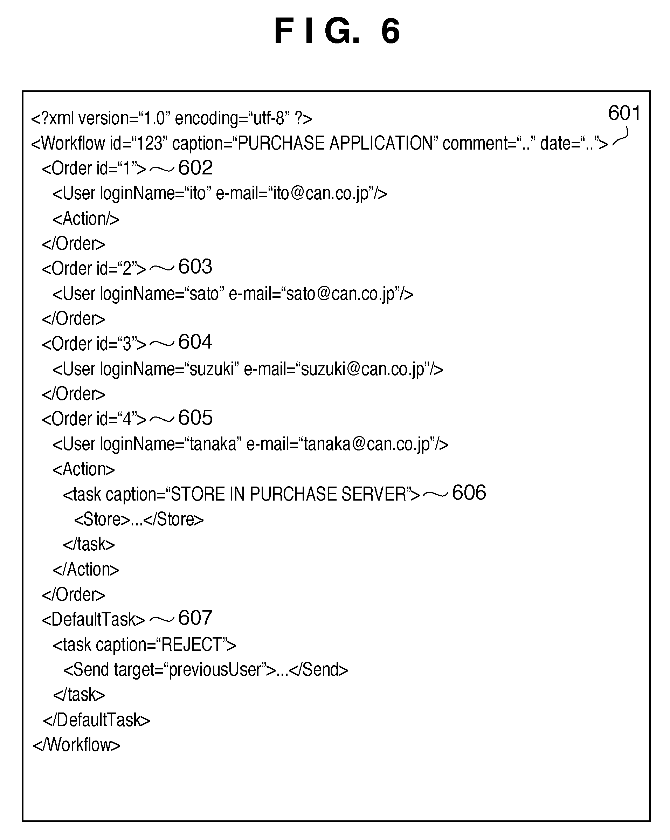

An example of workflow information will be described with reference to Fig. 6.

Fig. 6 is a view showing an example of workflow information transmitted from the printer driver to the image forming apparatus according to the embodiment of the present invention.

In this embodiment, workflow information is described in the XML format. Not only the XML format but also any other unique format is usable if it can be interpreted between the printer driver and the image forming apparatus.

A tag 601 represents workflow outline information including a workflow ID, workflow name, comment, and date of creation.

Tags 602 to 605 indicate the settings and order of the steps of the workflow. An id element in the tag 602 represents the order of the step in the workflow. The appearance order of the tags in the workflow information may represent the order of the steps.

The tag 602 represents the information of the applicant which is the first step of the workflow. A <User...> tag describes the login information and e-mail address of the applicant. An <Action...> tag represents a task executable by the applicant of this step using the image forming apparatus. In the example of the tag 602, there is no task unique to the applicant.

Similarly, the tags 603 to 605 express approvers and tasks executable by the respective approvers. In this example, as a task executable by the last approver of the tag 605, a task (tag 606) of storing a read document in a server is defined. However, Fig. 6 does not illustrate detailed settings of the task.

A tag 607 defines a task executable in all steps. In the example in Fig. 6, a task of sending e-mail to the applicant or approver before the step is set. However, Fig. 6 does not illustrate details of the task.

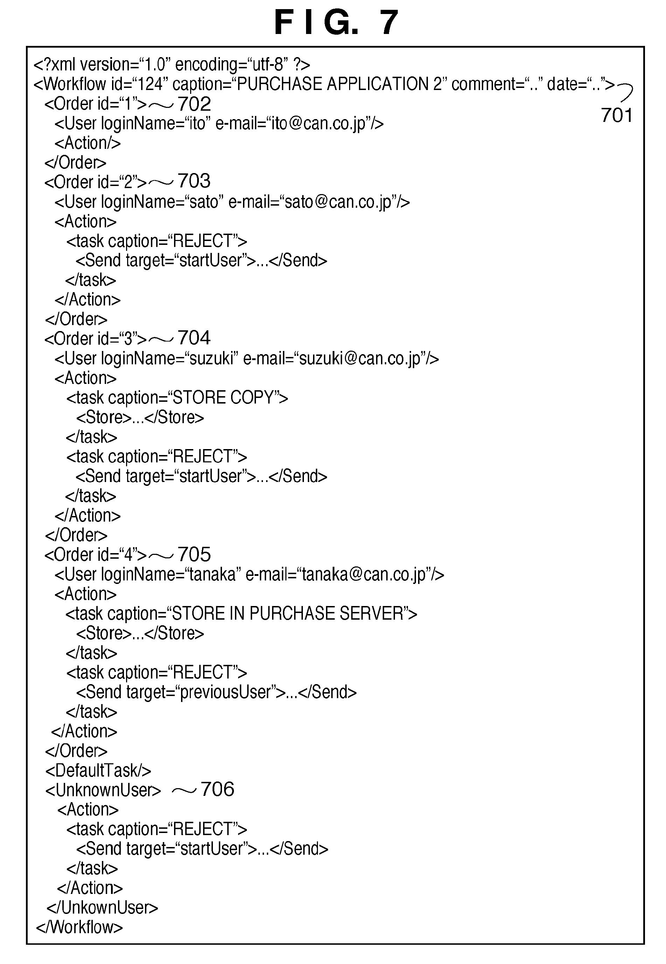

Another example of workflow information will be described with reference to Fig. 7.

Fig. 7 is a view showing another example of workflow information according to the embodiment of the present invention.

A tag 701 represents workflow outline information, like the tag 601.

Tags 702 to 705 indicate information about the applicant and approvers, as in Fig. 6. In the example shown in Fig. 7, however, there is no task like the task of the tag 607 executable in all steps. Instead, tasks executable in the respective steps are set.

In the step represented by the tag 702, no task executable by the applicant is set.

In the step represented by the tag 703, a task of sending e-mail to the user of the first step, that is, the applicant is set.

In the step represented by the tag 704, a task of storing a file and a task of sending e-mail to the user of the first step are set.

In the step represented by the tag 705, a task of storing a file and a task of sending e-mail to the user of the previous step are set.

A tag 706 represents a task executable by a user who is not included in the steps of the workflow using the image forming apparatus.

In this embodiment, examples of tasks are e-mail sending and document storage (file storage) in the server. Various tasks such as FAX transmission, printing, and start of digital workflow can also be set.

Upon receiving PDL information and workflow information from the printer driver via the communication unit 402, the image forming apparatus 110 sets a print task in the task execution unit 407 and executes the print task.

The task execution unit 407 of the image forming apparatus 110 transfers the workflow information (XML file) to the embedded information creation unit 409 to generate a watermark image. The image processing unit 209 composites the watermark image with an image obtained by rendering the PDL information. The image forming apparatus 110 transmits the image composited by the image processing unit 209 from the printer I/F 210 to the printer unit 113 to print on a paper sheet.

In this embodiment, to embed workflow settings in a paper sheet, a watermark image is composited with an image obtained from PDL information. The workflow information may be converted into a two-dimensional barcode and printed. Alternatively, using a paper sheet with an RFID (Radio Frequency Identification) tag embedded, workflow information may be embedded by recording the workflow settings in the RFID tag upon printing.

The sequence of paper output for a paper-based workflow has been described above. This allows outputting a paper sheet (paper document) in which workflow information about a paper-based workflow is embedded.

The output paper sheet with the workflow information embedded is delivered by hand or mailed for circulation or approval as a paper-based workflow.

In this embodiment, workflow settings are done by the printer driver of the client PC 140. However, any other arrangement is usable if it can eventually set workflow settings in the image forming apparatus 110. For example, the image forming apparatus 110 may serve as a Web server to provide a Web service or Web page for workflow setting to the client PC 140 and receive workflow settings and a print image from the client PC via the We service or page.

### <Task Execution by Image Forming Apparatus>

A sequence of processing of executing a task using the image forming apparatus will be described next, in which, for example, contents printed on a paper sheet are not in order, and an intermediate approver sends e-mail to notify rejection, or the last approver performs storage processing.

In this embodiment, task execution using the image forming apparatus 110 will be exemplified. However, task execution need not always be done by the image forming apparatus which has output a paper sheet with workflow information embedded. A task is executable by another image forming apparatus, that is, the image forming apparatus 120.

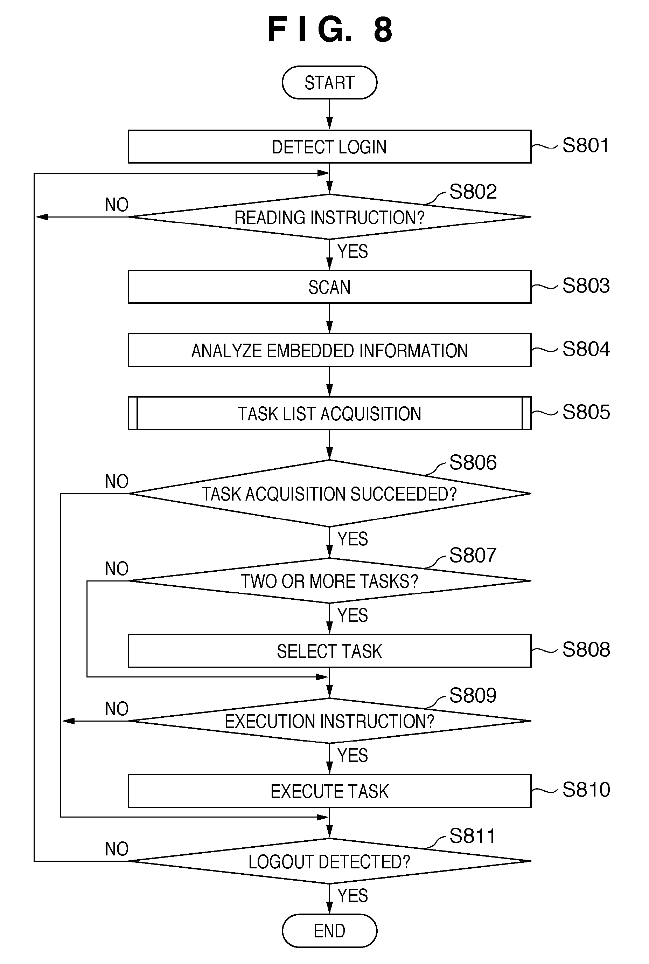

Fig. 8 is a flowchart illustrating processing of executing a task embedded in a paper sheet according to the embodiment of the present invention. The steps of the flowchart are implemented by causing the CPU 201 to control and execute the various software modules shown in Fig. 4 as needed.

In step S801, the UI unit 401 displays a login window (not shown) and waits for a login operation of the user. When the user inputs login information via the operation unit 111, the UI unit 401 detects the login. The authentication unit 403 performs authentication using the input login information. If authentication has succeeded, the process advances to step S802. If authentication has failed, the UI unit 401 prompts the user to input login information again in step S801. In this embodiment, user authentication is done based on a user name and a password which are input as character strings. Instead, user authentication may be done using an IC card or biological information.

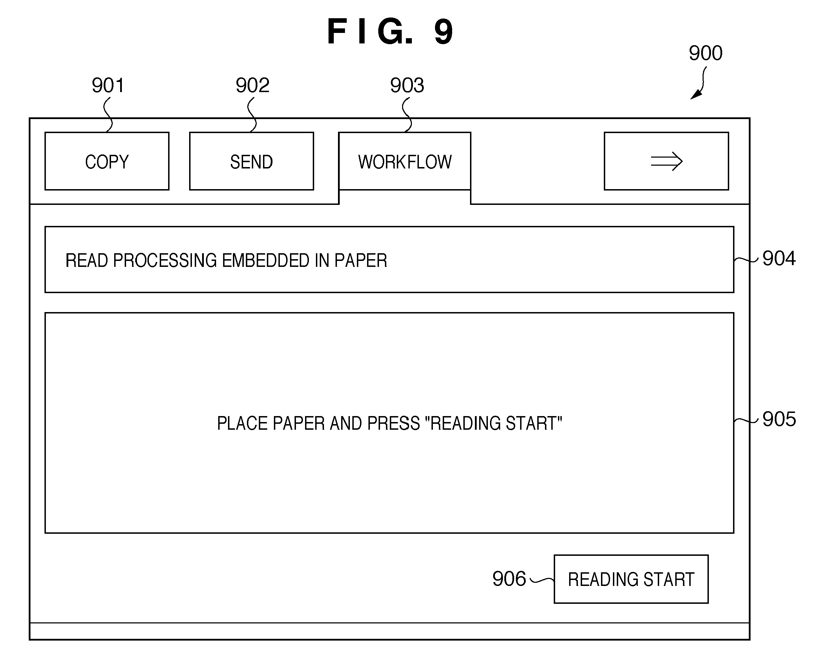

After the login, the UI unit 401 displays an operation window on the operation unit 111. An example of an operation window 900 will be described with reference to Fig. 9.

Fig. 9 is a view showing an example of an operation window according to the embodiment of the present invention.

On the operation window 900, buttons 901, 902, and 903 are used to switch applications on the image forming apparatus 110.

The button 901 is used to display a copy task setting window. The button 902 is used to display a transmission task setting window. The button 903 is used to display a window (to be referred to as a paper embedded task execution window hereinafter) for executing a task embedded in a paper sheet. Fig. 9 shows a state in which the button 903 is pressed to display the paper embedded task execution window.

A display area 904 shows the current state. A display area 905 displays details of the state. A button 906 is pressed to start reading a document set on the scanner unit 112.

The explanation will return to Fig. 8.

In step S802, the UI unit 401 determines the presence/absence of a reading instruction. The UI unit 401 determines the presence/absence of a reading instruction depending on whether the button 906 has been pressed. If a reading instruction is input (YES in step S802), the process advances to step S803. If no reading instruction is input (NO in step S802), the process waits until a reading instruction is input.

In step S803, the flow management unit 405 sets, in the task execution unit 407, a scan task for embedded information reading so that the task execution unit executes the scan task. The task execution unit 407 causes the scanner unit 112 to read an image. The task execution unit 407 temporarily stores the read image in the HDD 204.

In step S804, the task execution unit 407 causes the embedded information extraction unit 408 to analyze and extract the embedded information (watermark image) from the image read in step S803. The embedded information extraction unit 408 extracts the workflow information embedded in the paper sheet from the embedded information. The embedded information extraction unit 408 temporarily stores the extracted workflow information in the HDD 204.

If the workflow information is embedded not in the watermark image but in a two-dimensional barcode, the embedded information extraction unit may extract the workflow information by analyzing the two-dimensional barcode. If the workflow information is embedded in an RFID tag, an RFID reader may be attached to the scanner unit 112 read out the information from the RFID tag.

In step S805, the flow management unit 405 determines the current step of the workflow based on the extracted workflow information, and acquires a list of executable tasks.

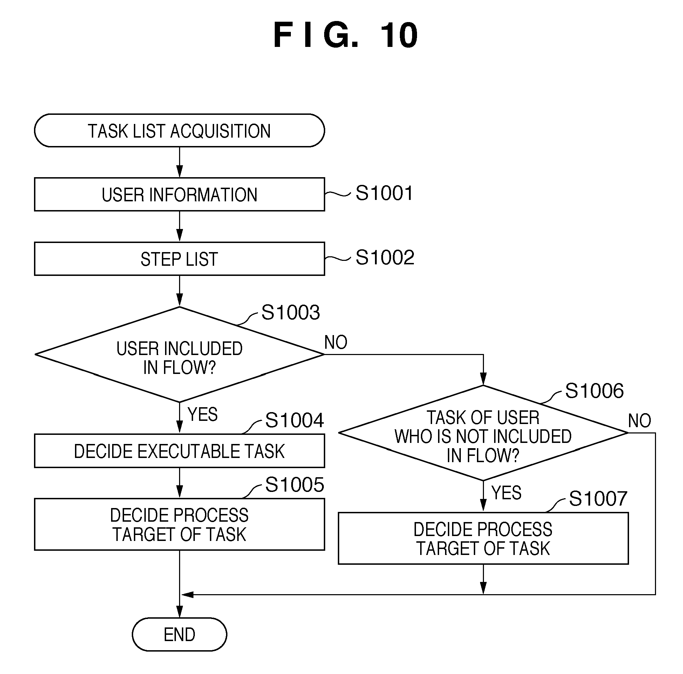

Details of the process in step S805 will be described with reference to Fig. 10.

Fig. 10 is a flowchart illustrating details of the process in step S805 according to the embodiment of the present invention.

In step S1001, the flow management unit 405 inquires of the authentication unit 403 and acquires the user information of the user who is currently logging in.

In step S1002, the flow management unit 405 analyzes the acquired workflow information and acquires the list of steps.

In step S1003, the flow step determination unit 406 determines whether the current user (login user) represented by the acquired user information is included in each step of the acquired list.

If the current login user is included (YES in step S1003), the flow step determination unit 406 determines that the paper workflow is currently in that step, and the process advances to step S1004. If the current login user is not included (NO in step S1003), the process advances to step S1006. In the example of workflow information shown in Fig. 6, if the login user name is "Suzuki", it is determined that the workflow is currently in the third step. If the current login user is included in two or more steps of the workflow, UI display is done to prompt the user to select a step.

In step S1004, the flow step determination unit 406 acquires a task (task information) included in the current step of the workflow determined in step S1003. Assume that it is determined that the current step is the third step in the example of workflow information shown in Fig. 6. In this case, the tag 604 defines no task. However, the tag 607 defines a task, and the flow step determination unit 406 extracts the task "reject".

In step S1005, the flow step determination unit 406 determines the process target of each of the extracted tasks. Assume that the current step is the third step, and the task "reject" is extracted in the example of workflow information shown in Fig. 6. In this case, the sending process target of the task includes all users before the current step. Hence, the flow step determination unit 406 determines three destinations: "ito@can.co.jp", "sato@can.co.jp", and "suzuki@can.co.jp".

If the login user is not included (NO in step S1003), the flow step determination unit 406 determines in step S1006 whether the workflow includes a task executable by a user who is not included in the steps. If a task is included (YES in step S1006), the process advances to step S1007. If no task is included (NO in step S1006), the process ends. In the example of workflow information shown in Fig. 6, the process does not advance to step S1007. In the example of workflow information shown in Fig. 7, however, the process advances to step S1007 because the tag 706 defines a task "reject".

In step S1007, the flow step determination unit 406 determines the process target of the extracted task, as in step S1005. In the example of workflow information shown in Fig. 7, the sending process target of the task "reject" of the tag 706 is the user of the first step. Hence, the flow step determination unit decides one destination "ito@can.co.jp" that is the e-mail address of the applicant.

The process in step S805 has been described above. This process enables determination of the current step of the workflow and extract executable tasks and their settings.

The explanation will return to Fig. 8.

In step S806, the flow management unit 405 determines whether task acquisition has succeeded. If one or more tasks are acquired (YES in step S806), the process advances to step S807. If no task is acquired, (NO in step S806), the UI unit 401 displays an error message to notify the absence of an execution target task, and the process advances to step S811.

In step S807, the flow management unit 405 determines whether two or more tasks are acquired in step S805. If two or more executable tasks exist (YES in step S807), the process advances to step S808. If two or more executable tasks do not exist (NO in step S807), the process advances to step S809.

Since two or more executable tasks exist, in step S808, the UI unit 401 displays a task list window including the tasks on the operation unit 111 and causes the user to select a task to be executed. The UI unit 401 selects an execution target task based on the operation on the task list window.

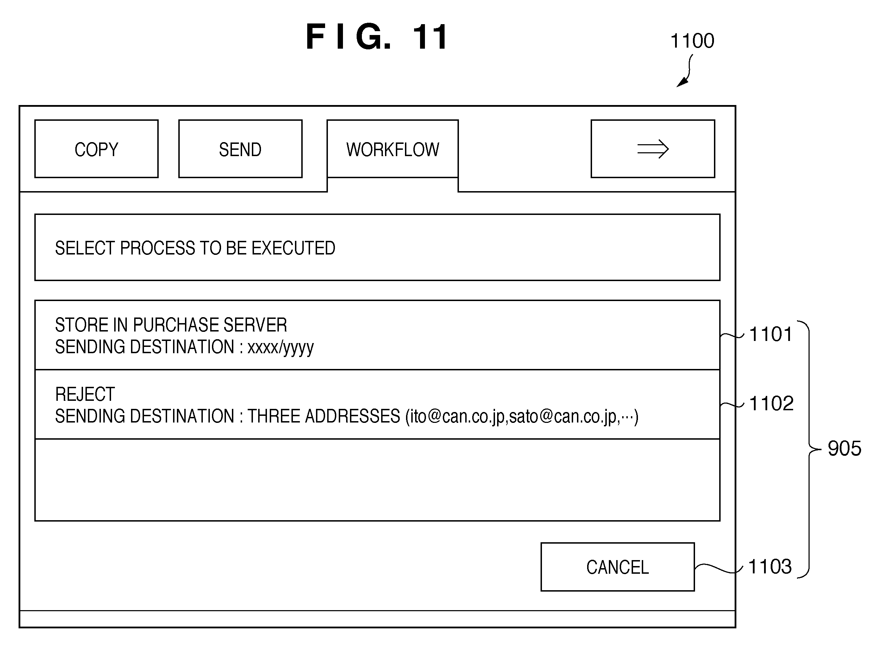

An example of the task list window will be described with reference to Fig. 11.

Fig. 11 is a view showing an example of the task list window according to the embodiment of the present invention.

A task list window 1100 shows the updated display contents of the operation window 900.

The display area 905 displays a list of acquired tasks. Fig. 11 shows a display example when the user "tanaka" in the example of workflow information shown in Fig. 7 has read out tasks from the paper sheet.

In this case, the tasks "store in purchase server" and "reject" described in the tag 705 are displayed. The destination of the task "reject" has been determined by the process in step S805. These tasks are displayed as selectable items in display areas 1101 and 1102, respectively. The execution target task can be determined by causing the user to select one of the items from the list.

A button 1103 is pressed to interrupt the processing. When the user presses the button, the processing is interrupted. In this case, the process returns to step S802 (not illustrated in the flowchart).

The explanation will return to Fig. 8.

In step S809, the UI unit 401 displays a task setting display window that shows the settings of the execution target task determined in step S807 or S808 and determines the presence/absence of an execution instruction from the user.

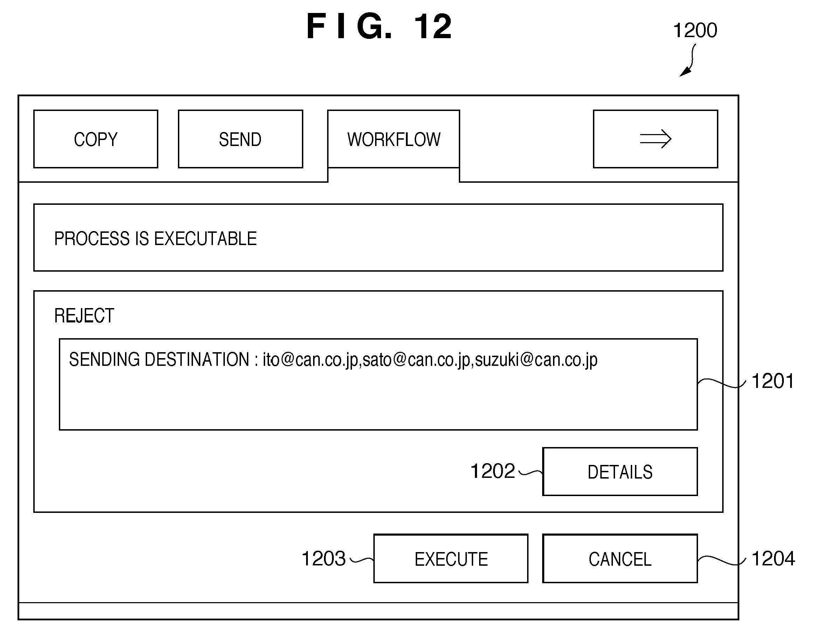

An example of the task setting display window will be described with reference to Fig. 12.

Fig. 12 is a view showing an example of the task setting display window according to the embodiment of the present invention.

A task setting display window 1200 in Fig. 12 shows a case in which the user has selected the item of the task "reject" in Fig. 11. A display area 1201 displays the setting contents of the execution target task. A button 1202 is pressed to invoke a window to change details of the task. When the user presses the button 1202, an execution target task setting window (not shown) is displayed so that the user can change the destination or set a file format.

A button 1203 is used to instruct execution of the task. When the user presses the button 1203, the process advances to step S810. A button 1204 is used to stop execution of the task. When the user presses the button 1204, the processing is interrupted, and the process advances to step S811.

The explanation will return to Fig. 8.

If an execution instruction is input (YES in step S809), the task execution unit 407 executes the execution target task in accordance with the task settings in step S810. For, for example, "e-mail sending", the task execution unit 407 sets the read image as an attached file and the destination in accordance with the task settings, and sends e-mail to the server 130. If the task is "store in purchase server" in Fig. 6, the task execution unit 407 stores the read image in a designated place of the server 130.

In step S811, the UI unit 401 determines the presence/absence of a logout operation from the user. If a logout operation is performed (YES in step S811), the UI unit 401 executes logout processing and ends the processing. The logout operation is detected when no user operation is performed for a predetermined time, or when the user presses a logout button (not shown).

If no logout operation is performed (NO in step S811) and, for example, if an operation other than the logout operation is performed, the process returns to step S802.

Processing of causing the image forming apparatus 110 to execute a task based on a paper sheet with workflow information embedded has been described above.

As described above, according to this embodiment, the image forming apparatus reads a paper sheet with workflow information embedded. This makes it possible to execute a task corresponding to a user specified by the read workflow information.

In the example shown in Fig. 6, if the approver "Suzuki" is to reject the application, he/she can designate execution of the task of sending e-mail to the preceding approver "sato" and the applicant "ito". If the final approver "tanaka" has read the application, he/she can selectively execute one of the task of "sending e-mail" to the preceding approvers and the applicant and the task of "storing in purchase server".

As described above, it is possible to solve the problem of a paper-based workflow that the user can know neither the current step of the workflow nor the necessary processing. This makes it possible to execute flexible exception processing or image processing halfway during a paper-based workflow or in its final step. Additionally, since workflow information is embedded in a paper sheet, it is possible to reduce the cumbersomeness of preparing a separate server dedicated for workflows.

In the above embodiment, the processes of the respective step of a workflow are described in the workflow settings. Instead of describing the processes in the workflow, tasks set in the program of the image forming apparatus may be executed.

For example, in an arrangement which supports only the task "reject", only the user information and order of the steps are described in the workflow settings. In this case, the program of the image forming apparatus can set, as an execution target task, the task of "sending" upon determining that the current step is halfway during the workflow, or the task of "sending" for rejection or "storing in server" upon determining that the current step of the final step of the workflow.

This saves the trouble for the user of having to set detailed tasks at the stage of setting a workflow. The user needs only to set approvers.

In the above embodiment, the user names are described in the workflow settings. However, any other information can be described if it can discriminate the step to which the user who has logged in and instructed reading belongs (if the information can specify the user). For example, a job title or role is set in a workflow in advance and compared in step S805 with the job title or role of the user who has logged in, thereby determining the current step.

This saves the trouble for the applicant of having to grasp and set the approvers in advance.

In the above embodiment, the current step is determined based on the login information of the user. However, information other than the login information is also usable to determine the step. For example, OCR processing is performed for a specific area of a paper sheet before step S805 to determine the presence/absence of sign information such as a seal or a signature. In this case, it is possible to determine in step S805 the presence/absence of sign information such as a seal or a signature in the specific area and tasks executable by the login user. If a seal for approval is present, the task of "storing in server" is executed, otherwise, the task "reject" is executed. That is, sophisticated control can be implemented.

Note that the present invention can be applied to an apparatus comprising a single device or to system constituted by a plurality of devices.

Furthermore, the invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code installed in the computer also implements the present invention. In other words, the claims of the present invention also cover a computer program for the purpose of implementing the functions of the present invention.

In this case, so long as the system or apparatus has the functions of the program, the program may be executed in any form, such as an object code, a program executed by an interpreter, or script data supplied to an operating system.

Example of storage media that can be used for supplying the program are a floppy disk, a hard disk, an optical disk, a magneto-optical disk, a CD-ROM, a CD-R, a CD-RW, a magnetic tape, a non-volatile type memory card, a ROM, and a DVD (DVD-ROM and a DVD-R).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

It is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Besides the cases where the aforementioned functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A workflow support apparatus for supporting processing associated with a workflow that circulates a paper document to associated responsible persons and completes the processing, **characterized by** comprising:
reading means (112) configured to read a paper document in which workflow information is embedded, the workflow information containing responsible person information and a process order of steps of the workflow;
authentication means (403) configured to authenticate a user who instructs execution of said reading means;
extraction means (408) configured to extract the workflow information from a read image obtained by said reading means; and
determination means (406) configured to determine, on the basis of the responsible person information and the process order in the workflow information extracted by said extraction means and authentication information used to authenticate the user by said authentication means, a current step of the workflow of the paper document read by said reading means.

2. The apparatus according to claim 1, comprising decision means (405) configured to decide a task executable in each step of the workflow,
said decision means decides a task executable in the step determined by said determination means.

3. The apparatus according to claim 2, wherein said decision means (405) decides the task executable in the step determined by said determination means by referring to information of a task executable in each step of the workflow, which is defined in the workflow information.

4. The apparatus according to claim 2, comprising execution means (407) configured to execute the task decided by said decision means (405).

5. The apparatus according to claim 2, wherein the task includes at least one of e-mail sending, file storage, FAX transmission, and printing.

6. The apparatus according to claim 4, wherein said execution means (407) executes, as the task, e-mail sending to a responsible person before a step of the workflow corresponding to the user authenticated by said authentication means (404).

7. The apparatus according to claim 1, comprising:
reception means (402) configured to receive the workflow information and an image for printing to form the paper document to be circulated from an information processing apparatus, which information processing apparatus allows entry of settings associated with the workflow, including generation of the workflow information containing the responsible person information and the process order of the steps of the workflow;
embedding means (409) configured to embed the workflow information received by said reception means (402) in the image received by said reception means to print the paper document to be circulated; and
printing means configured to print the image in which the workflow information is embedded by said embedding means (409).

8. A workflow support apparatus for supporting processing associated with a workflow that circulates a paper document to associated responsible persons and completes the processing, comprising:
setting means (401) configured to set settings associated with the workflow, including generation of workflow information containing responsible person information and a process order of steps of the workflow;
generation means configured to generate an image for printing to form the paper document to be circulated; and
transmission means (402) configured to transmit the workflow information set by said setting means (401) and the image generated by said generation means to an image forming apparatus for printing the paper document to be circulated by the workflow.

9. The apparatus according to claim 8, wherein said setting means (401) displays, on a display unit, a setting window (500) including a first input area (506) where information about an applicant of the workflow is input and a second input area (507) in which information about an approver corresponding to the applicant is input, and allows input of the settings associated with the workflow based on an operation for the setting window.

10. A workflow support system for supporting processing associated with a workflow that circulates a paper document to associated responsible persons and completes the processing, the workflow support system including an information processing apparatus (140) for generating an image for the paper document, and an image forming apparatus for forming an image on the paper document (110) based on the image, wherein:
said information processing apparatus comprises:
setting means configured to set settings associated with the workflow, including generation of workflow information containing responsible person information and a process order of steps of the workflow;
generation means configured to generate an image to print the paper document to be circulated; and
transmission means configured to transmit the workflow information set by said setting means and the image generated by said generation means to said image forming apparatus for printing the paper document to be circulated by the workflow, and
said image forming apparatus comprises:
reception means (402) configured to receive the workflow information and the image for printing to form the paper document to be circulated from said information processing apparatus;
embedding means (409) configured to embed the workflow information received by said reception means in the image received by said reception means to print the paper document to be circulated;
printing means (113) configured to print the image in which the workflow information is embedded by said embedding means;
reading means (112) configured to read the paper document in which the workflow information is embedded;
authentication means (404) configured to authenticate a user who instructs execution of said reading means;
extraction means (408) configured to extract the workflow information from a read image obtained by said reading means; and
determination means (406) configured to determine, on the basis of the responsible person information and the process order in the workflow information extracted by said extraction means (408) and authentication information used by said authentication means to authenticate the user, a current step of the workflow of the paper document read by said reading means (112).

11. A method of controlling a workflow support apparatus for supporting processing associated with a workflow that circulates a paper document to associated responsible persons and completes the processing, comprising the steps of:
causing a reading unit (112) to read a paper document in which workflow information is embedded (S803), the workflow information containing responsible person information and a process order of steps of the workflow;
authenticating (S801) a user who instructs execution of the reading step;
extracting (S804) the workflow information from a read image obtained in the reading step; and
determining (S806), on the basis of the responsible person information and the process order in the workflow information extracted in the extracting step and authentication information used to authenticate the user in the authenticating step, a current step of the workflow of the paper document read in the reading step.

12. A method of controlling a workflow support apparatus for supporting processing associated with a workflow that circulates a paper document to associated responsible persons and completes the processing, comprising the steps of:
entering settings associated with the workflow, including generation of workflow information containing responsible person information and a process order of steps of the workflow;
generating an image for printing to form the paper document to be circulated; and
transmitting the workflow information set in the setting step and the image generated in the generating step to an image forming apparatus (110) for printing the paper document to be circulated by the workflow.

13. A program for controlling a workflow support apparatus to perform a method according to claim 11.

14. A program for controlling a workflow support apparatus to perform a method according to claim 12.
